# EUROPEAN PATENT APPLICATION

(11) **EP 4 166 802 A1**
(43) Date of publication of application: **19.04.2023**
(21) Application number: 21203103.3
(22) Date of filing: 18.10.2021
(51) Int. Cl.: F16C 19/00, F16C 33/66

(54) **FLUID CONTAINER FOR BEARINGS**

(71) Applicant: Siemens Gamesa Renewable Energy A/S, 7330 Brande (DK)
(72) Inventor: Jespersen, Kim Stave Holm, 8700 Horsens (DK); Kristoffersen, Nicolai, 7100 Vejle (DK)
(74) Representative: SGRE-Association

(57) **Abstract**

A fluid container (1) for collecting lubricant (20) of a bearing (30) of a wind turbine, said fluid container (1) comprising
a body (2) having a first chamber (6) for storing the lubricant (20),
a piston (5) being axially displaceable within the body (2) and having a first surface delimiting the first chamber (6) in such a way that a displacement of the piston (5) results in a change of volume of the first chamber (6),
a first fluid inlet (3) arranged at the body (2) for coupling the fluid container (1) to the bearing (30) and for allowing a transfer of the lubricant (20) from the bearing (30) to the fluid container (1),
a first fluid outlet (4) arranged at the body (2) for draining the lubricant (20) stored in the first chamber (6), and draining means (7).

## Description

The present invention relates to a fluid container for collecting lubricant of a bearing of a wind turbine. The present invention further relates to a method of filling the fluid container, as well as to a method of draining the fluid container.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines have several components that require lubrication, such as the drive train comprising the main bearing or the gearbox and the pitch bearings. Additionally, wind turbines are placed at locations providing high wind amounts. These locations are usually not easily reached, for example at offshore wind parks. Therefore, wind turbines need a lubrication system that provides ample lubrication at all times while at the same time extending the maintenance interval lengths so that the maintenance of the wind turbine is kept to a minimum, thereby reducing the service costs. At last, the simplification of the maintenance tasks of the lubrication system reduces the service costs as well and has further advantages, which will be explained below.

Lubricated components requiring a lubrication, such as the pitch bearings, are difficult to reach for maintenance works due to their spatial distribution at the hub. During maintenance of the pitch bearings, the rotation of the wind turbine has to be locked and the wind turbine is hold in a locked position to avoid injuries to the workers. Usually, removable platforms installed inside the hub are used to reach the pitch bearings for maintenance. To reach all three pitch bearings, the removable platform is installed, then the maintenance work for the first pitch bearing is done. After finishing the maintenance works for the first pitch bearing, the platform is removed, and the workers leave the hub to safely rotate the blades about 120° to do the maintenance works on the next pitch bearing. Then, the hub is again locked, and the removable platform is installed for the maintenance works of the second pitch bearing. The same is repeated for the third pitch bearing as well.

For pitch bearings, the maintenance of the bearings is a time intensive process which endures many security risks for the workers. One of the maintenance works is the draining of the waste lubricant cups, which is done manually for each cup attached to each pitch bearing. The waste lubricant cups are manually detached from the pitch bearing, then emptied in a container and attached again to each pitch bearing. This process is very time intensive, usually the emptying of each lubricant cup takes approximately 2h per pitch bearing. Then, the process of the workers leaving the hub, unlocking the rotation of the hub, rotating the hub by 120°, locking the rotation of the hub and reaching the next pitch bearing has to be done for the second and third pitch bearings. This overall process of draining the lubricant cups of the pitch bearings is very time consuming. Additionally, workers have to lay down to reach and empty the lubricant cups manually, so this process also results in security risks for the workers and bad working positions.

The current development of the technology of wind turbines tends to an increased size of wind turbines for harvesting more wind energy, with longer blades and higher towers. Due to the increasing size of wind turbines and the higher loads generated by the wind turbines, the components of the wind turbine needing lubrication such as the drive train or the pitch bearing have wider diameters as well to be able to transmit higher torques, requiring a higher amount of lubrication than smaller wind turbines and resulting in more waste lubrication which has to be drained.

It is an object of the invention to provide a fluid container for collecting lubricant of a bearing of a wind turbine which overcomes the problems related to the draining of the fluid container known from the prior art.

This is achieved by a fluid container for collecting lubricant of a bearing of a wind turbine according to claim 1, a method of filling the fluid container according to claim 14, and a draining of filling the fluid container according to claim 15.

According to the invention, a fluid container for collecting lubricant of a bearing of a wind turbine comprises a body having a first chamber for storing the lubricant, a piston being axially displaceable within the body and having a first surface delimiting the first chamber in such a way that a displacement of the piston results in a change of volume of the first chamber, a first fluid inlet arranged at the body for coupling the fluid container to the bearing and for allowing a transfer of the lubricant from the bearing to the fluid container, a first fluid outlet arranged at the body for draining the lubricant stored in the first chamber, and draining means for displacing the piston in the direction causing the volume of the first chamber to decrease in size.

The bearing is connectable to the fluid container by means of the first fluid inlet, suitable to establish a fluid connection between both parts and allowing the lubricant to flow from the bearing to the fluid container.

The fluid container is drainable by means of the first fluid outlet, which is connectable to an outlet system, for example by means of a hose, to drain the fluid container.

Hence, when the fluid container is coupled to the lubrication system of the bearing and lubricant flows from the bearing to the first chamber of the body of the fluid container, the pressure exerted on the first surface of the piston axially displaces the piston in a direction where the volume of the first chamber increases in size, which is usually the opposite direction to where the first fluid inlet is arranged in order to enhance the shifting of the piston.

When the fluid container is to be drained, then, independently of the filling state of lubricant in the fluid container, the draining means can be used to displace the piston in the direction causing the volume of the first chamber to decrease in size, which is usually the direction where the first fluid inlet is arranged.

The piston is axially displaceable and bidirectional, so the displacement of the piston causes the volume of the first chamber to either increase or decrease in size depending on the direction of the shifting.

According to a preferred embodiment of the invention, the lubricant is waste lubricant. Waste lubricant is lubricant already used by for example the bearing and being collected in a container, such as the fluid container.

According to another preferred embodiment of the invention, the bearing is a pitch bearing of the wind turbine. As the draining of the lubricant cups of pitch bearings is very cost intensive for workers, simplifying this process by replacing the lubricant cup by the fluid container is very advantageous.

According to another preferred embodiment of the invention, the lubricant is grease. Grease is preferably used as a lubricant for bearings of wind turbines.

According to another preferred embodiment of the invention, the draining means comprises a second chamber in the body and a second fluid inlet, wherein the piston is arranged between the first chamber and the second chamber, wherein the piston has second surface delimiting the second chamber in such a way that a displacement of the piston results in a change of volume of the second chamber, wherein the second fluid inlet is arranged at the body for filling the second chamber with a draining means fluid.

By filling the second chamber with the draining means fluid, the pressure in the second chamber increases over the pressure in the first chamber and the piston moves in the direction causing the volume of the first chamber to decrease in size, thereby draining the lubricant from the first chamber, which leaves the first chamber through the first fluid outlet.

The piston can be coupled to a rod to increase the stability of the piston within the body, which supports the linear movement of the piston.

The draining means fluid can be air or a hydraulic fluid, such as water or oil, resulting in a pneumatic or a hydraulic system, respectively.

According to another preferred embodiment of the invention, the piston is sealed to avoid a leakage of lubricant out of the first chamber. Additionally, if the fluid container has a first chamber and a second chamber, the piston seal keeps the pressurized fluid in their respective chambers, avoiding a mixture of fluids.

According to another preferred embodiment of the invention, the second fluid inlet comprises a second fluid inlet valve. A valve is an efficient way to allow or block the flow through the second fluid inlet. The valve can be a mechanical valve electrically controlled to open or close.

According to another preferred embodiment of the invention, the draining means fluid contained in the second chamber can be drained through the second fluid inlet. This measure simplifies the components of the fluid container, as the same component, the second fluid inlet, is used as an inlet and outlet for the draining means fluid. This also reduces costs and materials. When the second chamber is to be pressurized to drain the first chamber, then pressurized draining means fluid is introduced to the second chamber through the second fluid inlet. When the first chamber is drained, the second fluid inlet acts as an outlet to empty at least a part of the draining means fluid contained in the second chamber so that the pressure in the second chamber is reduced under the pressure value of the first chamber, thereby allowing the first chamber to be filled with lubricant again.

According to another preferred embodiment of the invention, the draining means further comprises a second fluid outlet for draining the draining means fluid contained in the second chamber. In this case, the second fluid inlet is used as an inlet for the draining means fluid and the second fluid outlet is used as an outlet for the draining means fluid.

According to another preferred embodiment of the invention, the second fluid outlet comprises a second fluid outlet valve. If the second fluid inlet and the second fluid outlet have each a valve, the pressure in the second chamber can be more efficiently controlled and the filling and draining process as well.

According to another preferred embodiment of the invention, the piston is coupled to a rod. The rod improves the stability of the axial movement of the piston by supporting the piston. Preferably, the rod extends within the body in the axial direction in which the piston can be axially displaced. Preferably, the rod extends out of the body as well, so that the rod can be coupled to another component which can control the axial movement of the rod and, thereby, the axial movement of the piston.

For example, the rod can be coupled to a motor to displace the piston. The rod can also be coupled to a hydraulic cylinder arranged outside the fluid container to displace the piston. The rod can also be coupled to a linear actuator to displace the rod.

According to another preferred embodiment of the invention, the first fluid inlet comprises a first fluid inlet valve. The first fluid inlet valve prevents a backflow of lubricant, usually waste lubricant, contained in the fluid container to the bearing when the bearing is connected to the fluid container. This backflow is prejudicial to the bearing, as the lubricant in the fluid container is usually contaminated waste lubricant, which by flowing back to the bearing might contaminate the fresh lubricant upstream.

According to another preferred embodiment of the invention, the first fluid inlet valve is a check valve. A check valve is a valve that only allows the flow of fluids in one direction; therefore, a check valve is a "one-way valve" or a "non-return valve". The valve has two ports, one as an inlet for the fluid and one as the output for the fluid. The main purpose of a check valve is to prevent backflow in the system. A check valve relies on a pressure differential to work. A check valve requires a higher pressure on the input side of the valve than the output side to open the valve. When the pressure is higher on the outlet side (or the input side pressure is not high enough), the valve will close. Depending on the valve type, the closure mechanism is different. Unlike other valves, they do not need a handle, lever, actuator, or human to correctly work.

Hence, the check valve is connectable to the bearing by the inlet port and connected to the fluid container by the outlet port and allows the flow of lubricant from the bearing to the fluid container when the fluid container is connected to the bearing and at the same time, prevents the lubricant from flowing back to the bearing from the fluid container.

Check valves are a cheap, effective and easy solution to prevent backflow to the bearing when the fluid container is connected to the bearing. As the movement of the piston during draining will increase the pressure inside the first chamber, during the draining process the check valve will automatically close.

According to another preferred embodiment of the invention, the first fluid outlet comprises a first fluid outlet valve. The first fluid outlet valve can prevent lubricant from flowing out of the first chamber. For example, during maintenance work in the lubricant outlet system, a hose which might be connected to the first fluid outlet valve might need a replacement. The first fluid outlet valve will prevent lubricant flowing out of the first chamber during this process. Alternatively, it is also efficient to first fill the first chamber until the piston reaches the bottom dead center before draining the first chamber. During this time, the first fluid outlet valve can be closed to prevent lubricant from flowing out of the first chamber.

According to another preferred embodiment of the invention, the body is tubular shaped. This allows to have a circular piston, which is easier to seal than other shapes due to the round contour. How to seal a piston is sufficiently known from the prior art, mostly from combustion chambers, but also applicable to hydraulic chambers.

According to another preferred embodiment of the invention, the first chamber is further delimited by at least a wall of the body. Hence, the first chamber is delimited by at least a wall of the body and by the first surface of the piston.

According to another preferred embodiment of the invention, the body is made of plastic. This is a cost-efficient material which is commonly used for lubricant containers.

According to another preferred embodiment of the invention, the fluid container comprises a sensor or a plurality of sensors for detecting the filling status of the first chamber.

The sensor allows a fast and efficient detection of full fluid containers; it in particular allows a triggering of a warning message to workers when the volume of the first chamber is above a predetermined threshold value to notify the workers that the first chamber is about to be full.

The sensor can be installed inside the fluid container and directly detect when the fluid reaches a predetermined threshold value of the volume of the first chamber. Alternatively, the sensor can detect the position of the piston for computing the volume of the first chamber, which correlates to the filling status of the fluid container.

According to another preferred embodiment of the invention, the fluid container is configured to be coupled to a lubrication waste collection system.

The waste lubricant collection system comprises an inlet system and an outlet system. The inlet system is connectable to the second fluid inlet and/or to the second fluid outlet of the fluid container, thereby distributing the draining means fluid to the second chamber of each fluid container coupled to the waste lubricant collection system to control the movement of the piston in each chamber and to be able to simultaneously drain all fluid containers. The outlet system is connectable to the first fluid outlet of the fluid containers and collects the waste lubricant drained out of the fluid containers coupled to the waste lubricant collection system, for example in a single container.

If the waste lubricant collection system is coupled to a plurality of fluid containers from multiple bearings, then it is useful to couple the inlet system to a distributor inlet unit connectable to the fluid containers of a single bearing. Similarly, the outlet system can be coupled to a distributor outlet unit connectable to the fluid containers of a single bearing. So, each bearing of a plurality of bearings coupled to the waste lubricant collection system is connectable to a distributor inlet unit and to a distributor outlet unit.

The distributor inlet unit distributes the draining means fluid to each of the fluid containers of the bearing it is coupled to. The distributor outlet unit collects the waste lubricant from each of the fluid containers of the bearing it is coupled to. This helps to efficiently distribute the draining means fluid and to efficiently collect waste lubricant from each bearing.

Yet another aspect of the invention relates to a method of filling the fluid container comprising the steps of coupling the fluid container to the bearing for collecting the lubricant of the bearing, and allowing the lubricant to flow inside the first chamber, thereby resulting in a displacement of the piston in the direction causing the volume of the first chamber to increase in size.

Yet another aspect of the invention relates to a method of draining the fluid container comprising the steps of displacing the piston in the direction causing the volume of the first chamber to decrease in size and draining the lubricant of the first chamber through the first fluid outlet.

In order to facilitate the understanding of the characteristics of the invention and being an integral part of this specification, some drawing sheets are attached on which figures, with an illustrative but not limiting character, the following is represented:
Figure 1 shows a fluid container according to a first embodiment of the invention with a piston at the top dead center.
Figure 2 shows a fluid container with a piston moving from the top dead center to the bottom dead center.
Figure 3 shows a fluid container according to another embodiment of the invention with a piston moving from the bottom dead center to the top dead center.
Figure 4 shows a waste lubricant collection system coupled to a plurality of fluid containers from multiple bearings.
Figure 5 shows a schematic drawing of a fluid container according to another embodiment of the invention having a check valve, a second fluid inlet and a second fluid outlet.
Figure 6 shows a schematic drawing of a fluid container according to another embodiment of the invention having a check valve and a second fluid inlet serving both as inlet and outlet for the draining means fluid.
Figure 7 shows a schematic drawing of a fluid container according to another embodiment of the invention having a check valve and a rod attached to the piston which can be coupled to an actuating system to displace the piston.

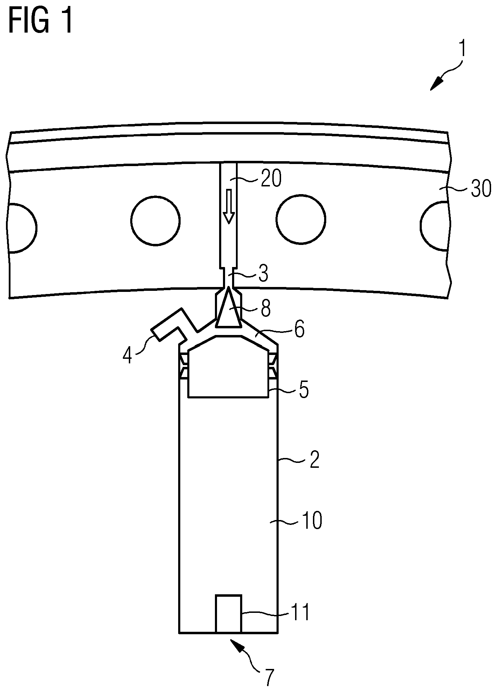

Figure 1 shows a fluid container 1 according to a first embodiment of the invention with a piston at the top dead center coupled to a bearing 30. The fluid container 1 comprises a body 2 having a first chamber 6 for storing lubricant 20, a piston 5 being axially displaceable within the body 2 and having a first surface delimiting the first chamber 6, a first fluid inlet 3 arranged at the body 2 and coupling the fluid container 1 to the bearing 30,a first fluid outlet 4 arranged at the body 2 for draining the lubricant 20 stored in the first chamber 6, and draining means 7 having a second fluid inlet 11.

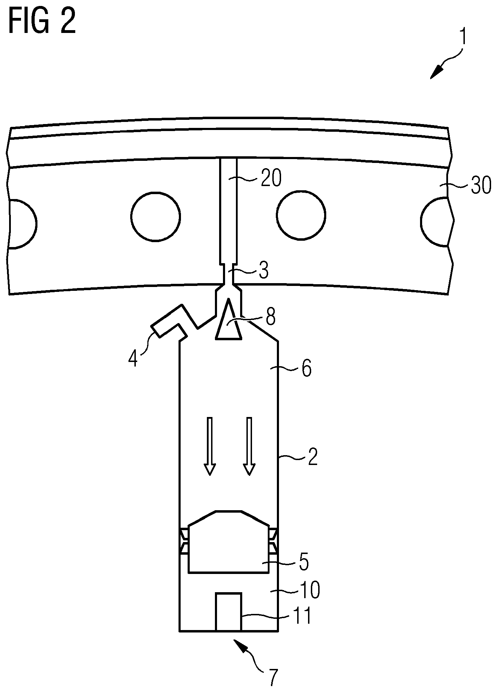

When the bearing 30 rotates, lubricant 20 will move from the bearing 30 to the fluid container 1 and enter the first chamber 6 of the fluid container 1 through the first fluid inlet 3. The pressure from the rotation of the bearing 30 forces the lubricant 20 into the fluid container 1 and the lubricant 20 inside the first chamber 6 forces the piston 5 to move down letting the fluid container 1 to be filled with lubricant 20, as shown in Fig 2. The pressure exerted on the first surface of the piston 5 by the lubricant 20 coming from the bearing 30 axially displaces the piston 5 in a direction where the volume of the first chamber 6 increases in size, which is the opposite direction to where the first fluid inlet 3 is arranged. The volume of the first chamber 6 is delimited by the wall of the body 2 and by the first surface of the piston 5.

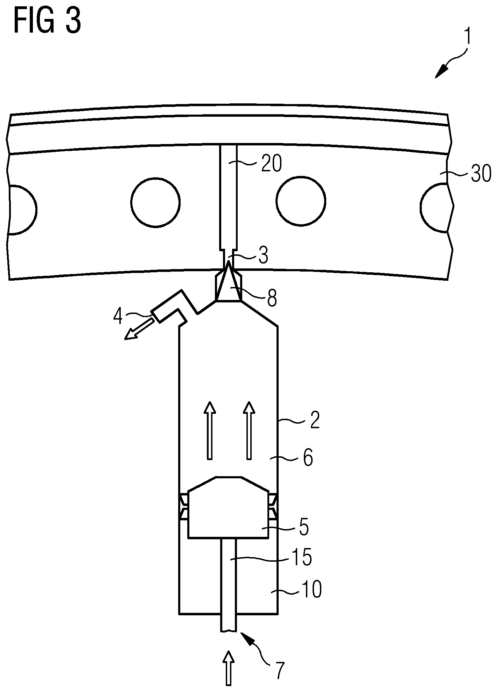

In Figs. 1 and 2, the draining means comprise a second fluid inlet 11, through which a second chamber 10 can be filled with draining means fluid so as to push the piston back to the top dead center and drain the first chamber 6 of lubricant 20. Alternatively, as shown in Fig. 3, the piston can comprise a rod 15 which can be controlled by a motor or an actuator externally to push the piston back to the top dead center and drain the first chamber 6 of lubricant 20. In Fig 3, the draining process by pushing the piston with the draining means 7 is shown, which results in the lubricant 20 leaving the first chamber 6 through the first fluid outlet 4. To prevent backflow to the bearing 30, a first fluid inlet valve 8 can be installed at the first fluid inlet 3, which is then closed during the draining process. Preferably, the first fluid inlet valve 8 is a check valve which automatically closes due to the pressure difference between the first chamber 6 and the bearing 30 during the draining process. A hose can be connected to the first fluid outlet 4 to transfer the fluid to a container, which is not shown in this figure.

When the piston 5 reaches the top dead center, the draining means 7 stops exerting a pressure on the piston 5 by decreasing the pressure in the second chamber 10 or by stopping the force exerted on the rod 15. This reduces the pressure in the first chamber 6 and the check valve will automatically open, allowing the first chamber 6 to be filled with lubricant 20 again.

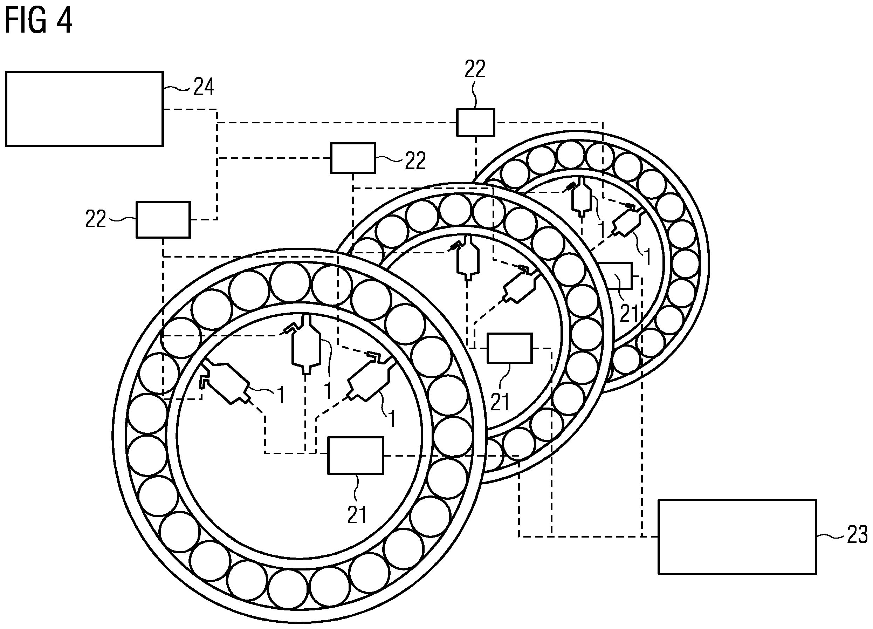

Figure 4 shows a waste lubricant collection system coupled to a plurality of fluid containers 1 from three bearings 30. These three bearings 30 could be the three pitch bearings of the wind turbine.

The waste lubricant collection system comprises an inlet system 23 and an outlet system 24. The inlet system 23 is connected to a distributor inlet unit 21 at each bearing 30. The distributor inlet unit 21 provides draining means fluid to the bearing 30 it is connected to. The outlet system 24 is connected to a distributor outlet unit 22 at each bearing 30. The distributor outlet unit 22 collects the waste lubricant 20 of the bearing 30 it is connected to.

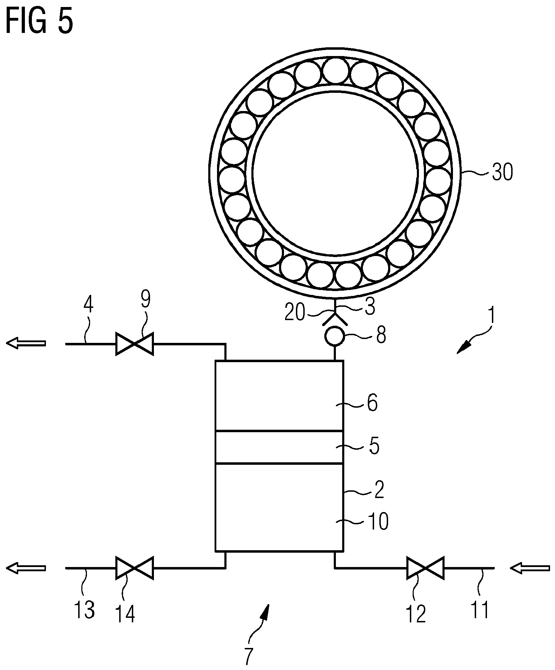

Figure 5 shows a schematic drawing of a fluid container 1 according to another embodiment of the invention having a check valve, a second fluid inlet 11 and a second fluid outlet 13. As can be seen in the Figure, the piston 5 is arranged between the first chamber 6 and the second chamber 10, wherein the piston 5 has second surface delimiting the second chamber 10. The second chamber 10 is further delimited by the wall of the body 2.

The first fluid inlet valve 8 is a check valve which will automatically open during the filling process and close during the draining process due to the pressure difference between the first chamber 6 and the bearing 30. During the filling process, the first fluid outlet valve 9 arranged at the first fluid outlet 4 will be closed so that the lubricant 20 flowing from the bearing 30 to the fluid container 1 is contained in the first chamber 6.

The draining means 7 comprise a second fluid inlet 11 with a second fluid inlet valve 12 and a second fluid outlet 13 with a second fluid outlet valve 14. During the draining process, the draining means fluid is introduced into the second chamber 10 through the second fluid inlet 11, wherein the second fluid inlet valve 12 is opened and the second fluid outlet 13 is closed to build up pressure inside the second chamber 10. The increase in pressure in the second chamber 10 pushes the piston 5 to the top dead center and drains the first chamber 6 through the first fluid outlet 4.

When the draining process is finished, the second fluid inlet valve 12 is closed and the second fluid outlet valve 14 is opened to decrease the pressure of the second chamber 10. This will allow to decrease the force exerted on the piston 5, thereby decreasing the pressure in the first chamber 6 and allowing the check valve to open again and the first chamber 6 to be filled again.

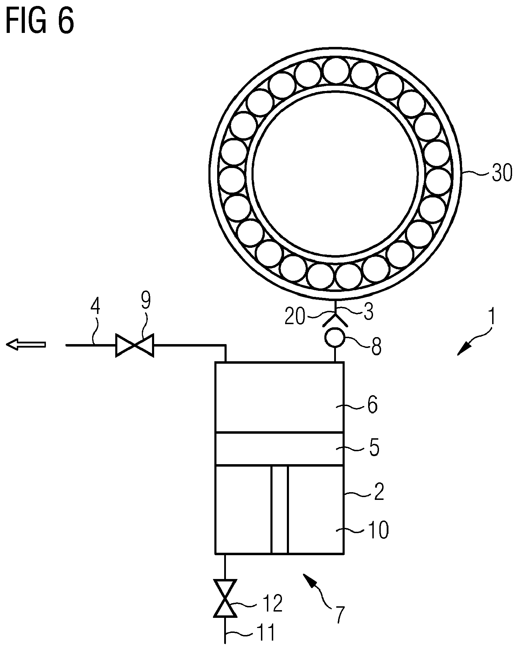

Figure 6 shows a similar schematic drawing as the one shown in Figure 5 with the difference that the draining means 7 comprise a second fluid inlet 11 with a second fluid inlet valve 12 serving both as inlet and outlet for the draining means fluid. When the draining process is finished, no more pressurized draining means fluid will be introduced in the second chamber 10 and the draining means fluid of the second chamber 10 will start flowing back through the second fluid inlet 11 to decrease the pressure of the second chamber 10. This will allow to decrease the force exerted on the piston 5, thereby decreasing the pressure in the first chamber 6 and allowing the check valve to open again and the first chamber 6 to be filled again.

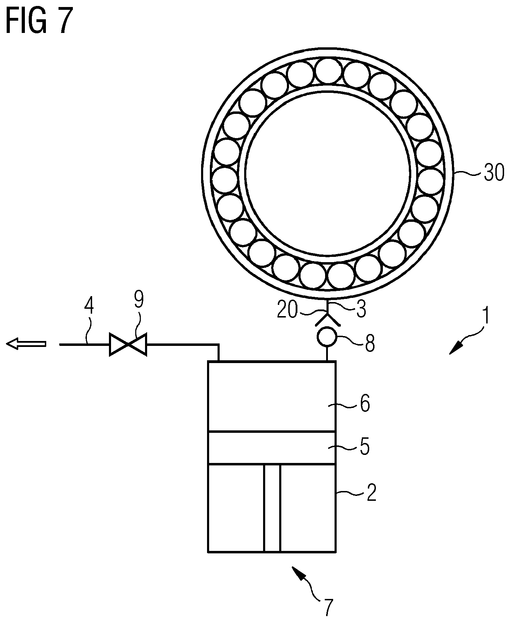

Figure 7 shows a schematic drawing of a fluid container 1 according to another embodiment of the invention having a check valve and a rod 15 attached to the piston 5 which can be coupled to an actuating system to displace the piston 5. The rod 15 is externally controlled to be displaced so that during the draining process, the piston 5 is displaced towards the top dead center and towards the filling process, the piston 5 is displaced towards the bottom dead center.

### Reference numbers

- **1**: Fluid container
- **2**: Body
- **3**: First fluid inlet
- **4**: First fluid outlet
- **5**: Piston
- **6**: First chamber
- **7**: Draining means
- **8**: First fluid inlet valve
- **9**: First fluid outlet valve
- **10**: Second chamber
- **11**: Second fluid inlet
- **12**: Second fluid inlet valve
- **13**: Second fluid outlet
- **14**: Second fluid outlet valve
- **15**: Rod
- **20**: Lubricant
- **21**: Distributor inlet unit
- **22**: Distributor outlet unit
- **23**: Inlet system
- **24**: Outlet system
- **30**: Bearing

## Claims

1. A fluid container (1) for collecting lubricant (20) of a bearing (30) of a wind turbine, said fluid container (1) comprising
a body (2) having a first chamber (6) for storing the lubricant (20),
a piston (5) being axially displaceable within the body (2) and having a first surface delimiting the first chamber (6) in such a way that a displacement of the piston (5) results in a change of volume of the first chamber (6),
a first fluid inlet (3) arranged at the body (2) for coupling the fluid container (1) to the bearing (30) and for allowing a transfer of the lubricant (20) from the bearing (30) to the fluid container (1),
a first fluid outlet (4) arranged at the body (2) for draining the lubricant (20) stored in the first chamber (6), and draining means (7) for displacing the piston (5) in the direction causing the volume of the first chamber (6) to decrease in size.

2. The fluid container (1) according to claim 1, wherein the draining means (7) comprises a second chamber (10) in the body (2) and a second fluid inlet (11), wherein the piston (5) is arranged between the first chamber (6) and the second chamber (10), wherein the piston (5) has second surface delimiting the second chamber (10) in such a way that a displacement of the piston (5) results in a change of volume of the second chamber (10), wherein the second fluid inlet (11) is arranged at the body for filling the second chamber (10) with a draining means fluid.

3. The fluid container (1) according to claim 2, wherein the second fluid inlet (11) comprises a second fluid inlet valve (12) .

4. The fluid container (1) according to claim 2 or 3, wherein the draining means fluid contained in the second chamber (10) can be drained through the second fluid inlet (11).

5. The fluid container (1) according to claim 2 or 3, wherein the draining means (7) further comprises a second fluid outlet (13) for draining the draining means fluid contained in the second chamber (10).

6. The fluid container (1) according to claim 5, wherein the second fluid outlet (13) comprises a second fluid outlet valve (14).

7. The fluid container (1) according to any of the preceding claims, wherein the piston (5) is coupled to a rod (15).

8. The fluid container (1) according to any of the preceding claims, wherein the first fluid inlet (3) comprises a first fluid inlet valve (8).

9. The fluid container (1) according to claim 8, wherein the first fluid inlet valve (8) is a check valve.

10. The fluid container (1) according to any of the preceding claims, wherein the first fluid outlet (4) comprises a first fluid outlet valve (9).

11. The fluid container (1) according to any of the preceding claims, wherein the body (2) is tubular shaped.

12. The fluid container (1) according to any of the preceding claims, wherein the first chamber (6) is further delimited by at least a wall of the body (2).

13. The fluid container (1) according to any of the preceding claims, wherein the body (2) is made of plastic.

14. Method of filling the fluid container (1) according to claims 1 to 13 comprising the steps of
- coupling the fluid container (1) to the bearing (30) for collecting the lubricant (20) of the bearing (30), and
- allowing the lubricant (20) to flow inside the first chamber (6), thereby resulting in a displacement of the piston (5) in the direction causing the volume of the first chamber (6) to increase in size.

15. Method of draining the fluid container (1) according to claims 1 to 13 comprising the steps of
- displacing the piston (5) in the direction causing the volume of the first chamber (6) to decrease in size, and
- draining the lubricant (10) of the first chamber (6) through the first fluid outlet (4).
